# FASCICULE DE BREVET EUROPEEN

(11) **EP 2 282 627 B1**
(45) Date de publication et mention de la délivrance du brevet: **20.04.2016**
(21) Numéro de dépôt: 09750008.6
(22) Date de dépôt: 05.05.2009
(51) Int. Cl.: A01D 34/66, A01B 63/24

(54) **FAUCHEUSE AVEC UN DISPOSITIF D'ALLÈGEMENT PERFECTIONNÉ**
RASENMÄHER MIT VERBESSERTER LASTENABWURFVORRICHTUNG
MOWER WITH IMPROVED LOAD-RELIEVING DEVICE

(30) Priorité: 06.05.2008 FR 0852994
(43) Date de publication de la demande: 16.02.2011
(73) Titulaire: KUHN S.A., 67700 Saverne (FR)
(72) Inventeur: WALCH, Martin, F-67490 Dettwiller (FR); WATTRON, Bernard, F-67700 Haegen (FR)
(74) Mandataire: Esch, Esther Evelyne
(86) Numéro de dépôt international: PCT/FR2009/000529
(87) Numéro de publication internationale: WO 2009/141527

(56) Documents cités:
- EP-A- 0 619 063
- FR-A- 2 654 897
- FR-A- 2 786 977
- FR-A1- 2 560 485
- US-B1- 6 912 832

## Description

La présente invention concerne une faucheuse comportant :
- un châssis possédant notamment une poutre transversale et deux montants latéraux munis de roues,
- un moyen de liaison permettant de lier ledit châssis à un véhicule moteur,
- au moins un mécanisme de récolte muni d'organes de coupe,
- un dispositif de suspension liant ledit mécanisme de récolte au châssis en autorisant un déplacement en hauteur dudit mécanisme de récolte par rapport au châssis,
- un dispositif d'allégement dudit mécanisme de récolte qui est constitué par des barres de torsion.

Sur les faucheuses connues de ce genre, le dispositif d'allégement est généralement constitué par des ressorts de tractions disposés entre le châssis et le dispositif de suspension. Ces ressorts exercent alors une traction vers le haut sur le dispositif de suspension et le mécanisme de récolte et reportent ainsi une partie de leur poids sur le châssis. Cet allégement évite que le mécanisme de récolte ne repose trop lourdement sur le sol. Il peut ainsi facilement suivre les dénivellations du sol. Cela diminue le risque de maltraitance du tapis végétal qui pourrait résulter d'une trop forte pression dudit mécanisme sur le sol. La puissance à développer pour déplacer la machine durant le travail peut aussi être réduite. Enfin, l'usure des parties du mécanisme de récolte qui frottent sur le sol est moins rapide.

Les ressorts de traction actuellement connus sont cependant volumineux et encombrants notamment lorsque la faucheuse possède une grande largeur de travail. Il y a aussi un risque de coincement de produits entre les spires de ces ressorts, ce qui pourrait nuire à leur fonctionnement. Enfin, leur coût est relativement élevé.

Le document FR 2 786 977 décrit une faucheuse avec un dispositif d'allégement constitué par des ressorts de traction fixés latéralement au châssis et indique que ces ressorts de traction peuvent être remplacés par des barres de torsion.

Le document FR 2 560 485 décrit une faucheuse-conditionneuse avec, d'une part, un dispositif d'allégement constitué par des ressorts de traction et, d'autre part, un accouplement d'égalisation de la pression exercée sur un des cylindres de conditionnement. Cet accouplement d'égalisation est constitué par une barre de torsion séparée pour solliciter chaque extrémité respective d'un cylindre de conditionnement supérieur en direction d'un cylindre de conditionnement inférieur. Chaque barre de torsion est en sus reliée à un organe d'égalisation des efforts de sollicitation.

La présente invention a pour but de proposer un dispositif d'allégement différent.

A cet effet, une importante caractéristique de l'invention consiste en ce que le dispositif d'allégement est constitué des barres de torsion qui sont reliées à la poutre transversale du châssis et dont chacune se compose d'un tube à l'intérieur duquel est disposée une tige avec une première extrémité qui est liée audit tube au moyen d'un manchon et avec une deuxième extrémité qui dépasse dudit tube et qui porte un levier sur l'une des extrémités duquel est articulée une tringle qui est dirigée vers le mécanisme de récolte et qui est elle-même articulée sur ledit mécanisme de récolte ou sur son dispositif de suspension.

Ces barres de torsion exercent, par l'intermédiaire des leviers et des tringles, une traction vers le haut sur le mécanisme de récolte ou sur le dispositif de suspension, ce qui allège ledit mécanisme. Ces barres de torsion sont peu encombrantes, faciles à mettre en oeuvre et d'un coût peu élevé. En sus, leur efficacité n'est pas altérée par des produits qui viendraient s'accumuler contre elles.

D'autres caractéristiques et avantages de l'invention ressortiront de la description ci-après avec référence aux dessins annexés qui représentent, à titre d'exemple non limitatif, une forme de réalisation de la faucheuse selon l'invention.

Sur ces dessins :
- la figure 1 représente une vue de dessus, partiellement en coupe, d'une machine selon l'invention en position de transport,
- la figures 2 représente une vue de côté, partiellement en coupe, de la faucheuse de la figure 1,
- la figure 3 représente une vue de côté, partiellement en coupe, de la faucheuse en position de travail,
- la figure 4 représente, à une plus grande échelle, des coupes longitudinales du dispositif d'allégement selon l'invention,
- la figure 5 représente une vue de détail du dispositif d'allégement selon l'invention.

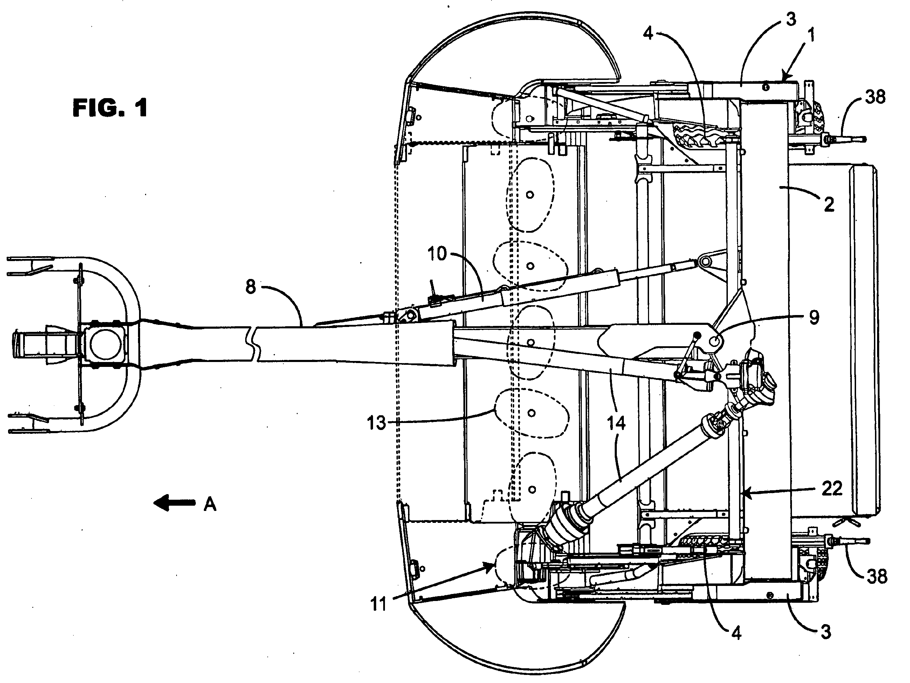

Telle qu'elle est représentée sur les figures 1 à 3, la faucheuse selon l'invention comporte un châssis (1) possédant notamment une poutre transversale (2) et deux montants latéraux (3) munis de roues (4). Chacune de ces roues (4) est montée sur un balancier (5) qui est articulé au moyen d'un axe (6) sur le montant latéral (3) correspondant. Entre chaque balancier (5) et le châssis (1) est disposé un vérin hydraulique (7) permettant de déplacer ledit châssis (1) en hauteur par rapport aux roues (4). Un moyen de liaison (8) tel un timon est articulé sur un axe sensiblement vertical (9) dudit châssis (1). Ce moyen de liaison (8) est déplaçable autour dudit axe d'articulation (9) à l'aide d'un vérin hydraulique (10) qui est lui-même articulé sur le châssis (1) et le moyen de liaison (8). Ce dernier permet d'accoupler la faucheuse à un véhicule tracteur (non représenté) qui assure à la fois le déplacement dans une direction d'avancement (A) et l'animation des différents organes de la faucheuse.

Le châssis (1) porte un mécanisme de récolte (11). Celui-ci est constitué par un carter (12) supportant des organes de coupe (13), lesquels sont destinés à être entraînés en rotation au moyen d'organes de transmission (14) allant du tracteur jusque dans le carter (12). Ce mécanisme de récolte (11) peut en sus comporter des moyens de traitement des produits fauchés. Le mécanisme de récolte (11) est relié au châssis (1) par l'intermédiaire d'un dispositif de suspension (15) autorisant un déplacement en hauteur dudit mécanisme de récolte (11) par rapport au châssis (1). Ce dispositif de suspension (15) se compose de deux bielles inférieures (16) et d'au moins une bielle supérieure (17). Les bielles inférieures (16) se situent sur les côtés latéraux de la machine et sont articulées sur le mécanisme de récolte (11) au moyen d'axes (18) et sur les balanciers (5) du châssis (1) au moyen d'axes (19). La bielle supérieure (17) est plus éloignée du sol que les bielles inférieures (16) et est articulée sur le mécanisme de récolte (11) avec un axe (20) et sur le châssis (1) au moyen d'un axe (21). Ces axes d'articulation (18, 19, 20 et 21) sont tous sensiblement horizontaux et sensiblement perpendiculaires à la direction d'avancement (A).

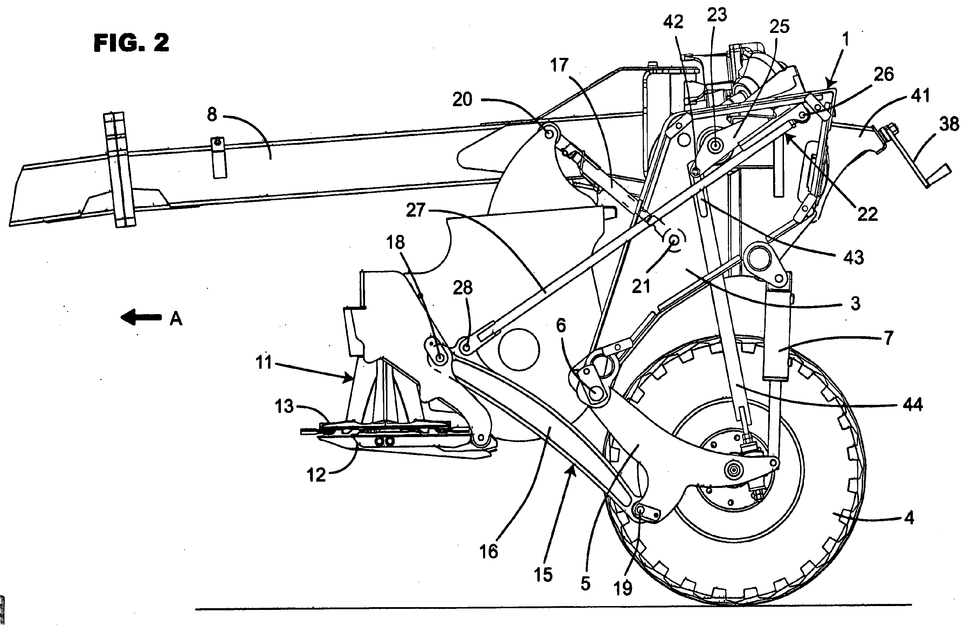

La faucheuse selon l'invention comporte aussi un dispositif d'allégement (22) du mécanisme de récolte (11). Il ressort de figures 2, 3 et 4 que ce dispositif d'allégement (22) est constitué par deux barres de torsion (23 et 24) qui sont reliées à la poutre (2). Chacune de ces barres de torsion (23 et 24) s'étend du milieu de la machine jusqu'à un des montants latéraux (3) du châssis (1) et porte à son extrémité latérale un levier (25) ayant lui-même deux extrémités situées l'une en arrière et l'autre en avant (vues dans la direction d'avancement A) de ladite extrémité latérale de la barre de torsion (23 ou 24) correspondante. Sur l'extrémité arrière dudit levier (25) est articulée, au moyen d'un axe (26), une tringle (27) qui est dirigée vers le mécanisme de récolte (11) et qui est articulée au moyen d'un axe (28) sur la bielle inférieure (16) du dispositif de suspension (15). Cet axe (28) se situe à proximité des organes de coupe (13) du mécanisme de récolte (11), mais il pourrait aussi se situer directement sur ledit mécanisme de récolte (11).

Dans l'exemple représenté, le dispositif d'allégement (22) possède deux barres de torsion (23 et 24) assurant l'allégement du dispositif de récolte par ses deux côtés. Ledit dispositif d'allégement (22) pourrait cependant ne comporter qu'une seule barre de torsion (23 ou 24) allégeant le dispositif de récolte (11) par l'un quelconque de ses côtés.

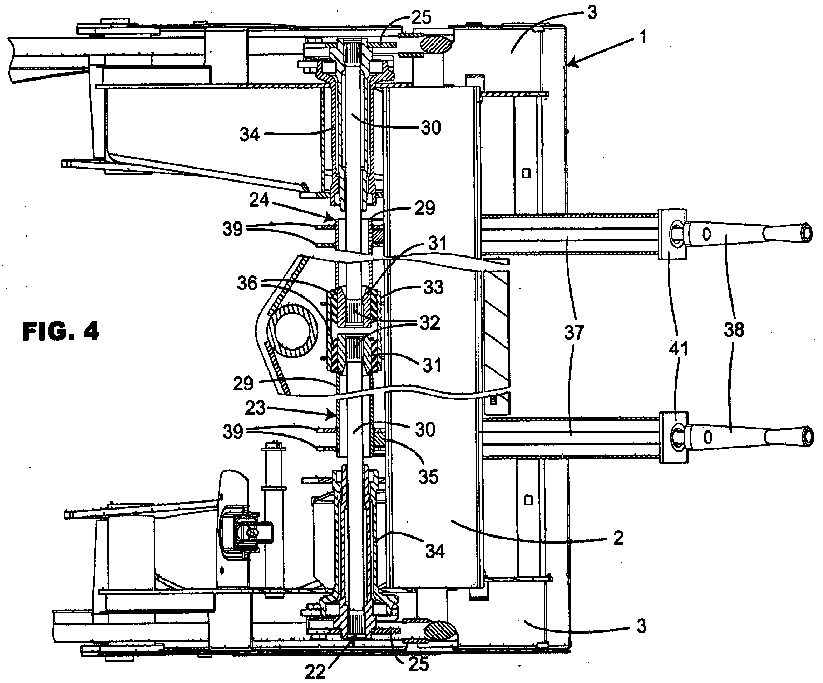

Il ressort notamment de la figure 4 que chaque barre de torsion (23, 24) se compose d'un tube (29) à l'intérieur duquel est disposée une tige (30) avec une première extrémité qui est liée audit tube (29) et une deuxième extrémité qui dépasse de ce dernier et qui porte le levier (25) correspondant. Chaque tube (29) et la tige (30) correspondante sont assemblés au moyen d'un manchon (31). Dans l'exemple représenté, chaque tube (29) est soudé au manchon (31) correspondant tandis que chaque tige (30) est liée audit manchon (31) correspondant par des cannelures (32).

Chaque barre de torsion (23, 24) est montée sur le châssis (1), d'une part, à l'aide d'un fourreau (33) qui est solidaire de la poutre (2) et, d'autre part, à l'aide d'un palier de guidage (34) qui est solidaire du montant latéral (3) correspondant. En sus, le tube (29) de chaque barre de torsion (23, 24) s'appuie sur une butée de forme cintrée (35) qui est solidaire de la poutre (2). Entre chaque barre de torsion (23, 24) et le fourreau (33) sont placées des bagues en caoutchouc (36). Celles-ci facilitent l'introduction dans le fourreau (33) desdites barres de torsion (23, 24) et leur assurent une certaine liberté de mouvement dans ledit fourreau (33).

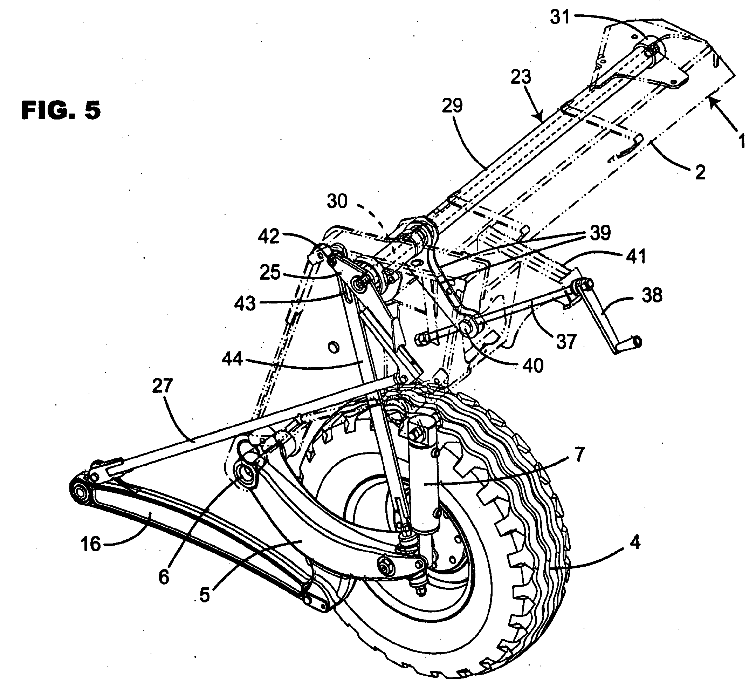

L'effort d'allégement de chaque barre de torsion (23, 24) est réglable au moyen de tiges filetées (37) avec des manivelles (38) pour les manoeuvrer (voir figure 5). A cet effet, chaque tube (29) comporte deux pattes (39) entre lesquelles est disposée une noix (40) que traverse une desdites tiges filetées (37). Ces tiges filetées (37) sont montées libres en rotation mais fixes en translation dans des supports (41) qui sont fixés sur la poutre (2) du châssis (1). La rotation de ces tiges filetées (37) provoque un déplacement des noix (40) et des pattes (39) qui font alors tourner les tubes (29) et les tiges (30) sur eux-mêmes de sorte à les tordre un peu plus ou un peu moins. Ceci permet d'augmenter ou de diminuer le bandage de ces derniers et de régler ainsi l'effort d'allégement.

Le levier (25) de chaque barre de torsion (23, 24) comporte à son extrémité avant, c'est-à-dire qui est opposée à celle qui porte la tringle (27), un galet (42). Celui-ci est guidé dans un orifice oblong (43) d'un tirant (44) qui est par ailleurs relié au balancier (5) portant une roue (4) de la machine. L'orifice oblong (43) permet à l'ensemble constitué par le mécanisme de récolte (11), la tringle (27) et levier (25) de se déplacer en hauteur pour suivre les dénivellations du sol.

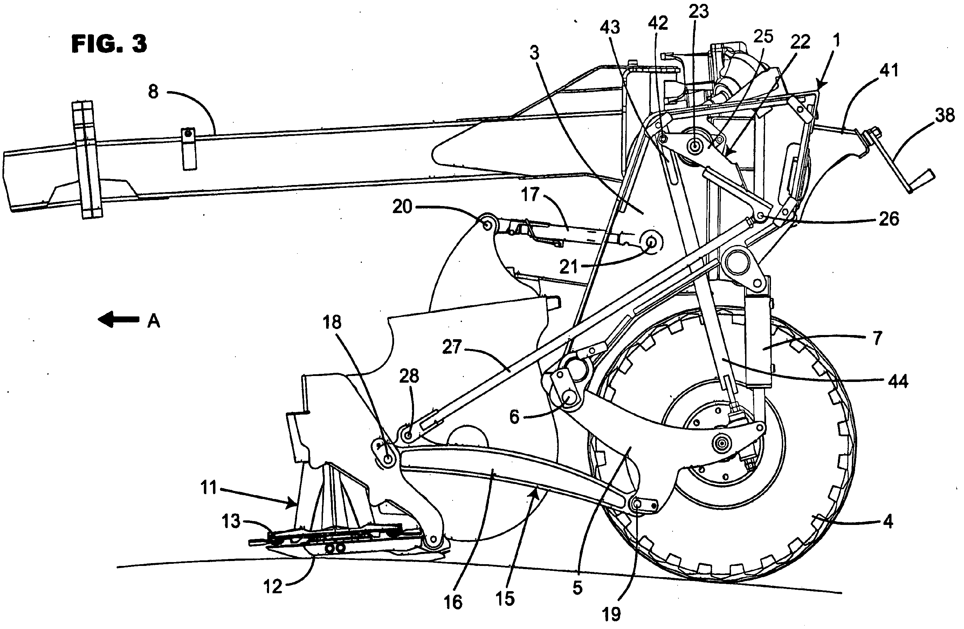

Durant le travail, le mécanisme de récolte (11) se situe à la surface du sol tel que cela est représenté sur la figure 3. Le châssis (1) et les tiges filetées (37) permettent alors d'augmenter ou de diminuer le bandage des barres de torsion (23 et 24) afin de moduler l'effort d'allégement exercé sur le mécanisme de récolte (11) par l'intermédiaire des leviers (25) et des tringles (27). Ainsi, lorsque le terrain comporte de nombreuses dénivellations constituées par des bosses et des creux, l'allégement peut être augmenté pour permettre aux organes de coupe (13) de suivre facilement ces dénivellations et assurer une coupe correcte. L'allégement peut aussi être augmenté lorsque les produits à couper sont denses et lourds et ont tendance à plaquer le mécanisme de récolte (11) au sol. A l'inverse, l'allégement peut être diminué, par exemple, dans les cas où les produits sont peu denses. Cela permet alors d'avancer vite durant le travail, le mécanisme de récolte restant tout de même constamment au contact du sol.

Pour le transport ou pour le passage au-dessus d'andains formés par des produits déjà coupés, le châssis (1) et le mécanisme de récolte (11) peuvent être soulevés pour les éloigner de la surface du sol (voir figure 2). Pour obtenir cette position, les vérins hydrauliques (7) sont actionnés pour qu'ils s'allongent. Dans un premier temps, les parties avant des balanciers (5) se lèvent autour des axes des roues (4) et soulèvent le châssis (1). Les galets (42) des leviers (25) se déplacent alors vers le haut dans les orifices oblongs (43) des tirants (44). Ces derniers sont quasiment immobiles ou sont même légèrement déplacés vers le bas par les extrémités arrière des balanciers (5). Dès que les galets (42) arrivent aux extrémités supérieures des orifices oblongs (43), les tirants (44) exercent une traction qui fait que les leviers (25) tournent avec les barres de torsion (23, 24) dans le sens où les efforts d'allégement sont augmentés. Les leviers (25) tirent alors les tringles (27) vers le haut de sorte que celles-ci entraînent le mécanisme de récolte (11) dans la même direction en le faisant pivoter au moyen du dispositif de suspension (15) par rapport au châssis (1). Les déplacements simultanés opérés par le châssis (1) et le dispositif de suspension (15) permettent d'obtenir un soulèvement rapide et de grande amplitude du mécanisme de récolte (11). Dans cette position, la distance dudit mécanisme (11) par rapport au sol est telle qu'il peut passer sans problème par-dessus les obstacles qu'on pourrait rencontrer sur le sol.

Le déplacement inverse de mécanisme de récolte (11), pour l'amener en position de travail, est obtenu par le raccourcissement des vérins hydrauliques (7).

Il est bien évident que l'invention n'est pas limitée au mode de réalisation décrit ci-dessus et représenté sur les figures annexées. Des modifications restent possibles, notamment en ce qui concerne la constitution ou le nombre des divers éléments ou par substitution d'équivalents techniques, sans pour autant sortir du domaine de protection.

## Revendications

1. Faucheuse comportant :
- un châssis (1) possédant notamment une poutre transversale (2) et des montants latéraux (3) munis de roues (4),
- un moyen de liaison (8) permettant de relier ledit châssis (1) à un véhicule moteur,
- au moins un mécanisme de récolte (11) muni d'organes de coupe (13),
- un dispositif de suspension (15) liant ledit mécanisme de récolte (11) au châssis (1) en autorisant un déplacement en hauteur dudit mécanisme de récolte (11) par rapport au châssis (1),
- un dispositif d'allégement (22) dudit mécanisme de récolte (11), qui est constitué par dés barres de torsion (23,24),
***caractérisée par le fait que*** les barres de torsion (23, 24) sont reliées à la poutre transversale (2) du châssis (1) et se compose chacune d'un tube (29) à l'intérieur duquel est disposée une tige (30) avec une première extrémité qui est liée audit tube (29) au moyen d'un manchon (31) et avec une deuxième extrémité qui dépasse dudit tube (29) et qui porte un levier (25) sur l'une des extrémités duquel est articulée une tringle (27) qui est dirigée vers le mécanisme de récolte (11) et qui est elle-même articulée sur ledit mécanisme de récolte (11) ou son dispositif de suspension (15).

2. Faucheuse selon la revendication 1, ***caractérisée par le fait* que** chaque barre de torsion (23, 24) est engagée dans un fourreau (33) qui est solidaire de la poutre transversale (2) du châssis (1).

3. Faucheuse selon la revendication 2, ***caractérisée par le fait* que** entre chaque barre de torsion (23, 24) et le fourreau (33) sont placées des bagues en caoutchouc (36).

4. Faucheuse selon l'une quelconque des revendications 1 à 3, ***caractérisée par le fait que*** l'effort d'allégement de chaque barre de torsion (23, 24) est réglable.

5. Faucheuse selon la revendication 4, ***caractérisée par le fait* que** le tube (29) de chaque barre de torsion (23, 24) porte des pattes (39) déplaçables au moyen d'une tige filetée (37) de manière faire tourner ledit tube (29) et la tige (30) correspondante sur eux-mêmes en vue d'augmenter ou diminuer le bandage du tube (29) et de la tige (30).

6. Faucheuse selon la revendication 1, ***caractérisée par le fait* que** le levier (25) de chaque barre de torsion (23, 24) comporte, à son extrémité opposée à celle qui porte la tringle (27), un galet (42) guidé dans un orifice oblong (43) d'un tirant (44) relié au balancier (5) portant une roue (4) du châssis (1).

## Patentansprüche

1. Mäher mit
- einem Rahmen (1), der insbesondere einen Querträger (2) und Seitenständer (3) aufweist, die mit Rädern (4) ausgestattet sind,
- einem Verbindungsmittel (8), das es ermöglicht, den Rahmen (1) mit einem Motorfahrzeug zu verbinden,
- mindestens einer Erntevorrichtung (11), die mit Schneidelementen (13) ausgestattet ist,
- einer Aufhängevorrichtung (15), welche die Erntevorrichtung (11) mit dem Rahmen (1) verbindet, wobei eine höhenmäßige Verschiebung der Erntevorrichtung (11) in Bezug auf den Rahmen (1) gestattet wird,
- einer Entlastungsvorrichtung (22) der Erntevorrichtung (11), die aus Torsionsstäben (23, 24) besteht,
***dadurch gekennzeichnet*, dass** die Torsionsstäbe (23, 24) mit dem Querträger (2) des Rahmens (1) verbunden sind und jeweils aus einem Rohr (29) bestehen, in dessen Innerem eine Stange (30) angeordnet ist, mit einem ersten Ende, das mit dem Rohr (29) mittels einer Muffe (31) verbunden ist, und mit einem zweiten Ende, das über das Rohr (29) hinausragt und das einen Hebel (25) trägt, auf einem dessen Enden ein Gestänge (27) angelenkt ist, das zur Erntevorrichtung (11) gerichtet ist und das seinerseits an der Erntevorrichtung (11) oder an ihrer Aufhängevorrichtung (15) angelenkt ist.

2. Mäher nach Anspruch 1, ***dadurch gekennzeichnet*, dass** jeder Torsionsstab (23, 24) in eine Hülse (33) eingefügt ist, die mit dem Querbalken (2) des Rahmens (1) fest verbunden ist.

3. Mäher nach Anspruch 2, ***dadurch gekennzeichnet*, dass** zwischen jedem Torsionsstab (23, 24) und der Hülse (33) Gummiringe (36) angeordnet sind.

4. Mäher nach irgend einem der Ansprüche 1 bis 3, ***dadurch gekennzeichnet*, dass** die Entlastungskraft von jedem Torsionsstab (23, 24) einstellbar ist.

5. Mäher nach Anspruch 4, ***dadurch gekennzeichnet*, dass** das Rohr (29) von jedem Torsionsstab (23, 24) Lappen (39) trägt, die mittels einer Gewindestange (37) verschiebbar sind, um das Rohr (29) und die entsprechende Stange (30) um sich selbst drehen zu lassen, um die Spannung des Rohrs (29) und der Stange (30) zu erhöhen oder zu verringern.

6. Mäher nach Anspruch 1, ***dadurch gekennzeichnet*, dass** der Hebel (25) von jedem Torsionsstab (23, 24) an seinem Ende, das dem gegenüberliegt, welches das Gestänge (27) trägt, eine Rolle (42) umfasst, die in einem Längsloch (43) einer Spannstange (44) geführt wird, die mit der Schwinge (5) verbunden ist, die ein Rad (4) des Rahmens (1) trägt.

## Claims

1. Mower comprising:
- a chassis (1) having in particular a transverse beam (2) and lateral uprights (3) provided with wheels (4),
- a connecting means (8) allowing the said chassis (1) to be connected to a motor vehicle,
- at least one harvesting mechanism (11) provided with cutting elements (13),
- a suspension device (15) connecting the said harvesting mechanism (11) to the chassis (1), allowing a heightwise displacement of the said harvesting mechanism (11) with respect to the chassis (1),
- a lightening device (22) for the said harvesting mechanism (11), which is constituted by torsion bars (23, 24)
***characterized in* that** the torsion bars (23, 24) are connected to the transverse beam (2) of the chassis (1) and are each composed of a tube (29) in the interior of which there is arranged a stem (30) with a first end which is linked to the said tube (29) by means of a sleeve (31) and with a second end which protrudes beyond the said tube (29) and which carries a lever (25) on one of the ends of which there is articulated a rod (27) which is directed towards the harvesting mechanism (11) and which is itself articulated on the said harvesting mechanism (11) or its suspension device (15).

2. Mower according to Claim 1, ***characterized in* that** each torsion bar (23, 24) is engaged in a sheath (33) which is rigidly fastened to the transverse beam (2) of the chassis (1).

3. Mower according to Claim 2, ***characterized in* that** rubber rings (36) are placed between each torsion bar (23, 24) and the sheath (33).

4. Mower according to any one of Claims 1 to 3, ***characterized in* that** the lightening effort of each torsion bar (23, 24) is adjustable.

5. Mower according to Claim 4, ***characterized in* that** the tube (29) of each torsion bar (23, 24) carries lugs (39) which are displaceable by means of a threaded rod (37) so as to make the said tube (29) and the corresponding (30) stem turn on themselves with the aim of increasing or decreasing the tightening of the tube (29) and of the stem (30).

6. Mower according to Claim 1, ***characterized in* that** the lever (25) of each torsion bar (23, 24) comprises, at its end opposite to that which carries the rod (27), a roller (42) guided in an oblong orifice (43) of a tie-bar (44) connected to the balance bar (5) carrying a wheel (4) of the chassis (1).
